# EUROPEAN PATENT APPLICATION

(11) **EP 4 847 458 A1**
(43) Date of publication of application: **02.12.2026**
(21) Application number: 25179863.3
(22) Date of filing: 30.05.2025
(51) Int. Cl.: C03B 37/012, C03B 37/027

(54) **INTERFACE FOR PRESSURIZATION OF OPTICAL FIBER**

(71) Applicant: Microsoft Technology Licensing, LLC, Redmond, WA 98052 (US); University Of Southampton, Southampton SO17 1BJ (GB)
(72) Inventor: ADAMU, Abubakar Isa, Redmond, 98052-6399 (US); MULCASTER, Jonathan James, Redmond, 98052-6399 (US); STROUD, John Robert, Redmond, 98052-6399 (US); HOOPER, Lucy Ellen, Redmond, 98052-6399 (US); SAKR, Hesham Abdelmonem Elgharib, Redmond, 98052-6399 (US); DANCER, Colin Michael Tregenza, Salisbury (GB); POLETTI, Francesco, Southampton, SO17 1BJ (GB); AMOUZAD MAHDIRAJI, Ghafour, Southampton, SO17 1BJ (GB)
(74) Representative: CMS Cameron McKenna Nabarro Olswang LLP

(57) **Abstract**

A method and apparatus for pressurizing an optical structure prior to drawing the optical structure into an optical fiber. The optical structure comprising a glass cladding and a plurality of capillaries within the glass cladding, the method comprising: manufacturing an interface structure for an end of the optical structure, the interface structure comprising a plurality of extensions 904, 906, 908, wherein each of the plurality of extensions is aligned with one of the plurality of capillaries, wherein the extensions extend beyond the glass cladding; and providing a source of pressure to the plurality of capillaries via the interface structure.

## Description

### BACKGROUND

Optical fibers may be formed in glass or another material by drawing the optical fiber from a cane in a drawing tower. In a drawing tower, a cane is heated and slowly pulled, elongating it. The resulting optical fibers have a smaller diameter than that of the cane, and an inner microstructure that matches that of the cane, albeit at a reduced scale. A cane is produced by drawing a cane preform, using a similar drawing process. During a drawing process, an act of heating, pulling and/and cooling may result in deformations in the canes and optical fibers which can affect the quality of a resultant optical fiber.

### SUMMARY

The following presents a simplified summary of the disclosure to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A method and apparatus for pressurizing an optical structure prior to drawing the optical structure into an optical fiber. The optical structure comprising a glass cladding and a plurality of capillaries within the glass cladding, the method comprising: manufacturing an interface structure for an end of the optical structure, the interface structure comprising a plurality of extensions, wherein each of the plurality of extensions is aligned with one of the plurality of capillaries, wherein the extensions extend beyond the glass cladding; and providing a source of pressure to the plurality of capillaries via the interface structure. The disclosed methods have many advantages. Interface structures may be additively manufactured, or laser cut, therefore there is a great variety in possible configurations of an interface structure that may be produced. The method and apparatus disclosed herein offer flexibility in terms of cane size and shape that the methods may be applied to, and also flexibility in the arrangement of optical structures, such as capillaries, that may be interfaced with in order to pressurize the components of the optical structure. The methods may be automated to increase preform or cane drawing speed. Furthermore, by accurate pressurization of capillaries and other cane or preform structures, there is an increase in yield of high-quality optical fibers that reduce wastage. A direct access to each capillary using the extensions of an interface allows complex pressurization requirements of structures during drawing (i.e., allowing for different amounts of pressure to be applied to the internal capillaries as required, such as, for example, an innermost nested capillary being supplied by the highest pressure).

Many of the attendant features will be more readily appreciated as the same becomes better understood by reference to the following detailed description considered in connection with the accompanying drawings.

### BRIED DESCRIPTION OF THE DRAWINGS

The present description will be better understood from the following detailed description read in light of the accompanying drawings, wherein:
FIGs. 1-3 show transverse cross-sectional views of three different examples of anti-resonant hollow core fibers.
FIG. 4 shows an example cane face.
FIG. 5 shows a flowchart for a method for pressurizing an optical structure.
FIG. 6A shows a flowchart for a method for manufacturing an interface structure using a 3D printing technique.
FIG. 6B shows steps for manufacturing an interface structure using a 3D printing technique.
FIG. 7 shows an example apparatus for pressurizing an optical structure using membranes.
FIGs. 8A and 8B show a flowchart for a method for manufacturing an interface structure, and an example interface structure.
FIG. 9 shows an example apparatus for pressurizing an optical structure.
Reference numerals are used throughout the description to designate parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

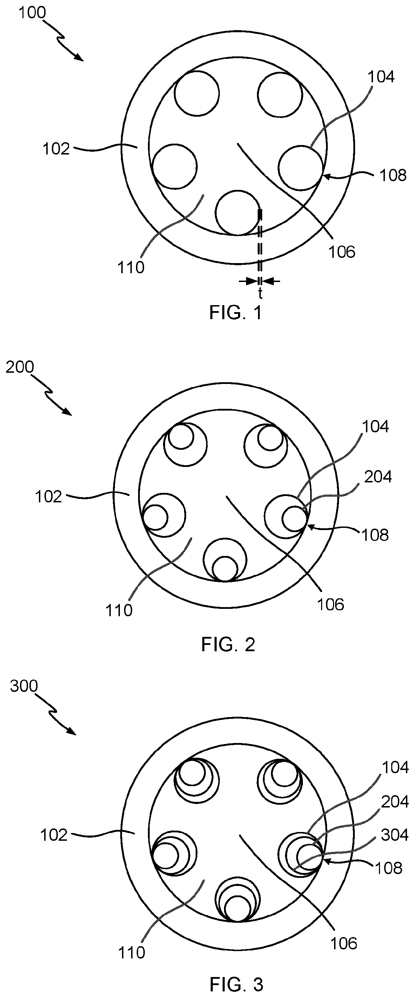

FIGs. 1-3 show transverse cross-sectional views of three different examples of antiresonant hollow core fibers (ARFs). The illustrated fibers each show their respective inner capillary structures. Light is guided in these fibers by an antiresonant optical effect. Each of the fibers 100, 200, 300 comprises a tubular outer cladding (or jacket) 102, a structured, inner, cladding comprising a plurality of tubular cladding capillaries 104, 204, 304 and a hollow core 106. The outer cladding 102 has a glass thickness that is typically much larger than that of the cladding capillaries 104, 204, 304. In the first example, shown in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are evenly spaced around the inner circumference of the outer cladding 102 and are also spaced apart from each other by gaps 110 (i.e. such that there is no contact between neighboring capillaries). In some designs of ARF, the cladding capillaries 104 may be positioned in contact with each other (in other words, not spaced apart as in FIG. 1), but spacing to eliminate this contact can improve the fiber's optical performance. The gaps 110 remove nodes that arise at the contact points between adjacent tubes, and which tend to cause undesirable resonances that result in high losses. Accordingly, fibers with spaced-apart cladding capillaries may be referred to as "nodeless antiresonant hollow core fibers".

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary provides the required antiresonance optical guidance effect or mechanism. The cladding capillaries 104 have a thickness, t, at the core boundary which defines the wavelength for which antiresonant optical guiding occurs in the ARF.

In the second example, shown in FIG. 2, each primary cladding capillary 104 has a secondary, smaller capillary 204 nested inside it, bonded to the inner surface of the primary cladding capillary 104, in this example at the same azimuthal location 108 as the point of bonding between the primary cladding capillary 104 and the outer cladding 102. These additional smaller capillaries 204 can reduce the optical loss. ARF designs of this type, with secondary capillaries, may be referred to as "nested antiresonant nodeless fibers" (NANFs) (TM).

The third example, shown in FIG. 3, has two smaller cladding capillaries 204, 304 nested inside each cladding capillary 104. As with the example shown in FIG. 2, each of the smaller capillaries 204, 304 is bonded to the inner surface of the immediately larger capillary at the same azimuthal location as the point of bonding between the primary cladding capillary 104 and the outer cladding 102. In this example, the smaller capillary 304 may be referred to as the secondary cladding capillary and the smallest capillary 204 may be referred to as the tertiary cladding capillary. The tertiary cladding capillary 204 is bonded to the inner surface of the secondary cladding capillary 304 and the secondary cladding capillary 304 is bonded to the inner surface of the primary cladding capillary 104. ARF designs of this type, with secondary and tertiary cladding capillaries may be referred to as "double-nested antiresonant nodeless fibers" (DNANFs). In yet further examples (not shown in the drawings) there may be a different configuration of cladding capillaries. For example, there may be smaller further capillaries, within the tertiary capillary 204 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

A technique for manufacturing such ARFs (referred to herein as 'optical fibers' or simply 'fibers'), including the nested and double-nested variants, is to use a preform. Preforms can be drawn into canes which can in turn be drawn into an optical fiber. In other words, the preform is a typically glass element that is used as basis for creating optical fiber. Preforms have matching internal structures to the resulting hollow core optical fiber but are larger scale (e.g. the diameter of a preform is on the scale of at least a few centimeters, while diameters of optical fibers may be on the micrometer scale). Cane preforms are typically manufactured by fusing together a plurality of glass tubes. This involves positioning the tubes that will form the structured inner cladding inside a tube that will form the tubular outer cladding and then applying heat along the outside of the tubular outer cladding at the point where the tubes are to be fused together. This involves multiple operations, e.g. to fuse each set of nested capillaries to the inner surface of the tubular outer cladding.

The preform is connected to a drawing system (e.g. a fiber drawing tower) and then heated and pulled slowly, which causes a narrowing and stretching effect on the part of the preform that is being pulled. The internal structure with regard to the internal capillaries is theoretically maintained after the drawing process. In various examples, the drawn preform is cut off the preform after it has been drawn in a drawing system, which produces separated canes. The drawing process may be repeated on the canes to produce fibers with the fiber structure varying dependent upon aspects occurring during the drawing process, such as, but not limited to, surface tension of the drawn material, heating variations, etc.

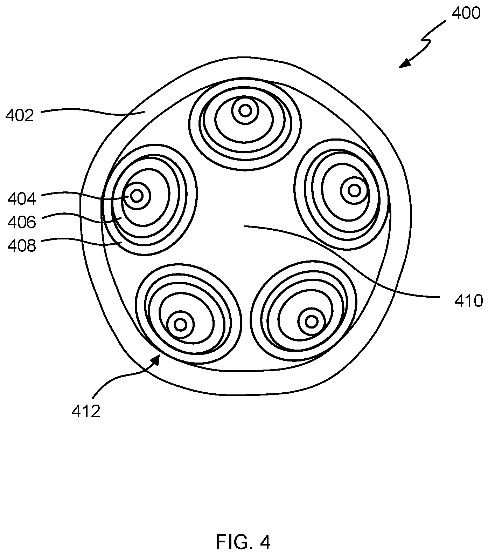

FIG. 4 shows an example of a cane face 400. The outer glass cladding 402, and internal nested capillaries (inner 404, middle 406 and outer 408) are shown, as well as the core 410.

As a preform is heated and drawn, effects such as surface tension and the pressure differences within the capillaries themselves lead to a deformation of the internal structure in the resultant cane or fiber, as the pressure differences act to close the fiber or cane. The deformation is visible from the end face 400. A consequence of this is that the outer 408 and middle 406 capillaries in the internal nesting structure may have an oval shape, as shown in FIG. 4. There is also the risk of deformation of the overall outer glass cladding 402, which houses the internal capillaries 404, 406, 408. To produce an optical fiber, the cane must be drawn and further deformation may occur. A deformed optical fiber is of lower quality, with a potential loss of resonance due to the new shape, which affects the light that will eventually travel down the resulting fibers. There is therefore a desire to pressurize a cane to ensure that there is no loss of shape/structure during drawing of the optical fiber. As a result of different levels of deformation and their sizes, the core 410 and each of the internal capillaries 404, 406, 408 of the cane 400 will ideally require differing amounts of pressurization to prevent collapse of the structure, which may be referred to as a failed draw.

Current methods of pressurization are techniques such as inflation, which is filling a cane with a fluid, such as a gas, to expand the capillaries and core of the cane during the drawing process to produce an optical fiber. This is performed using gas conduits that are placed into the capillaries. Common gases to use are inert gases, such as (but not limited to) argon. Owing to the cylindrical shape of a typical preform, cane or fiber, the gas used to pressurize enters at one end face of the cylinder. However, problems exist with these methods. Due to the varying sizes of the internal capillaries within the preforms (inner, middle and outer nesting), there isn't a constant pressure across the face of the cane, meaning a constant amount of gas for the capillaries is not sufficient to correct the deformation properly. The innermost capillary will need more pressurization than the middle-nested capillary, which will in turn need more pressurization than the outer nested capillary. All nested capillaries will need more pressurization than the overall outer glass cladding. There is a great difficulty with being able to correctly apply the right amount of pressure within the individual capillaries and across the face of a cane, owing to the small sizes of the cane, meaning it is difficult to pressurize the individual capillaries. Furthermore, because of the small size of a cane, a size of a gas conduit inserted into the cane will be small (on a micrometer scale), so it is incredibly difficult and time-consuming to insert gas conduits into a cane in order to draw an optical fiber. In some examples, an approximate range of 5 to 20 kPa is provided to capillaries of a cane with an innermost capillary having a higher pressure than surrounding capillaries. An exemplary core pressure may be approximately 10kPa. While FIG. 4 shows an example cane with inner, middle and outer nested capillaries preform, it should be noted that this is an illustrative example. It is also possible to pressurize canes with less or more nesting, or where capillaries are not nested.

Hence, disclosed herein is a method and apparatus for pressurization of an optical structure, such as a preform or a cane, during drawing into a second optical structure, such as a fiber. There is provided an improved pressure interface that results in an improvement in quality of a drawn cane or fiber. Features and advantages will be described in more detail herein.

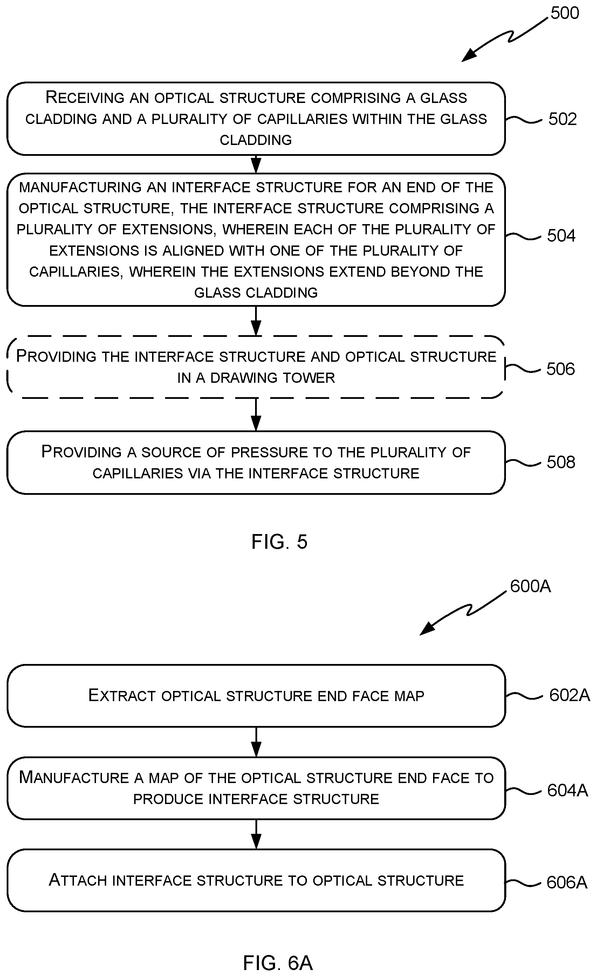

FIG. 5 shows a flowchart of a method 500 for pressurizing an optical structure, such as a preform or a cane, prior to drawing the optical structure into a second optical structure, such as an optical fiber. The method comprises receiving an optical structure comprising a glass cladding and a plurality of capillaries within the glass cladding 502, manufacturing an interface structure 504, providing the interface structure and optical structure in a drawing tower 506 and providing a source of pressure to the plurality of capillaries via the interface structure 508.

An optical structure is received 502. In one example, the optical structure is a cane. It may also be referred to as a second stage draw, as it will provide material for a second stage in the process of producing an optical fiber, the first stage draw being from a preform to a cane. However, the method is not limited to being performed on only canes and may be performed on other optical structures, but a cane is highlighted as an example. The cane may be received after cutting a length of cane from a longer length of cane after first stage draw process is complete. In various examples, the cane is received pre-drawn. In various examples, the cane is still attached to the preform (i.e., the method is performed directly during the drawing process). A cane is typically largely cylindrical with two faces on opposing ends of the cylinder. One face may be used for drawing, while the other used for pressurization, i.e. adding pressurized fluid such as argon gas.

To allow for the pressurization step, an interface structure, such as a cane interface, may be manufactured 504. In various examples, a cane interface comprises a set of extensions, wherein the set of extensions align with capillaries within the cane. In other words, the capillaries have a longitudinal axis, and this axis runs between the two end faces of the cane. The longitudinal axes of the capillaries and the cane are parallel. Hence, each of the set of extensions align with a different internal capillary of the second stage draw, such that each internal capillary has a maximum of one extension aligned. In other words, the longitudinal axis of an extension acts as an extension of the longitudinal axis of the internal capillary.

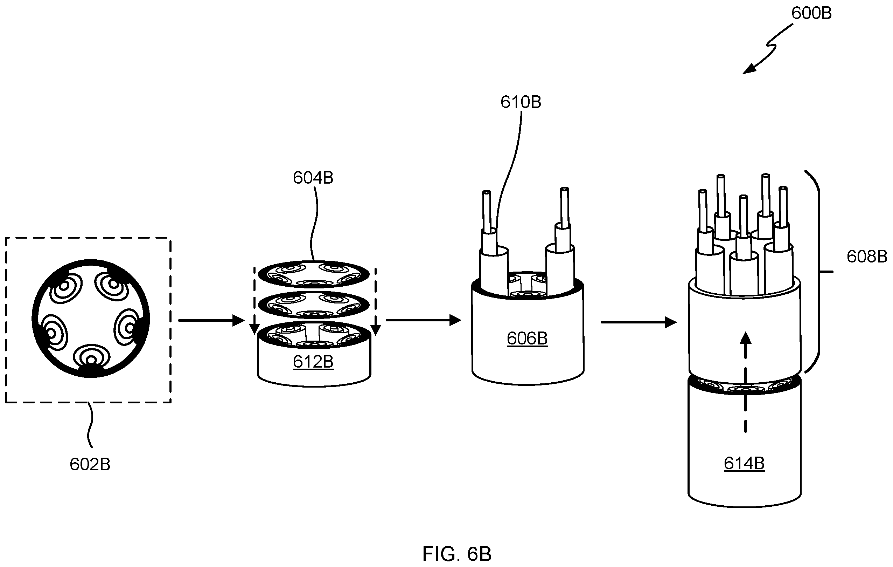

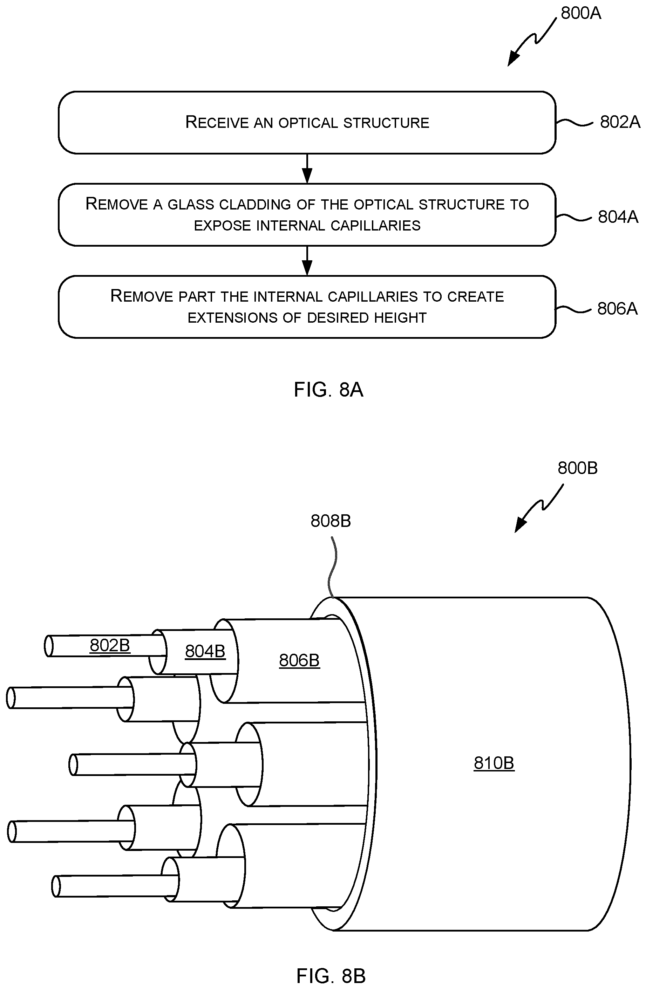

Interface structures, such as cane interfaces, may be manufactured using multiple methods, such as those described below. In various examples, an interface structure is manufactured by additive manufacturing, for example by using a 3D printer, which is described with reference to FIGs. 6A and 6B. In other examples, an interface structure, such as a cane interface, is manufactured by removing cane matter, for example by using a laser cutter, which is described below with reference to FIGs. 8A and 8B.

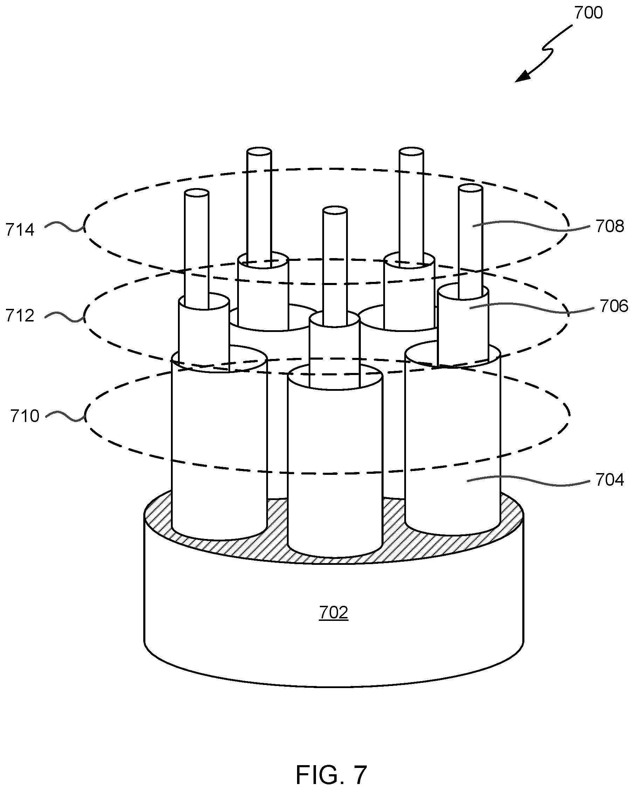

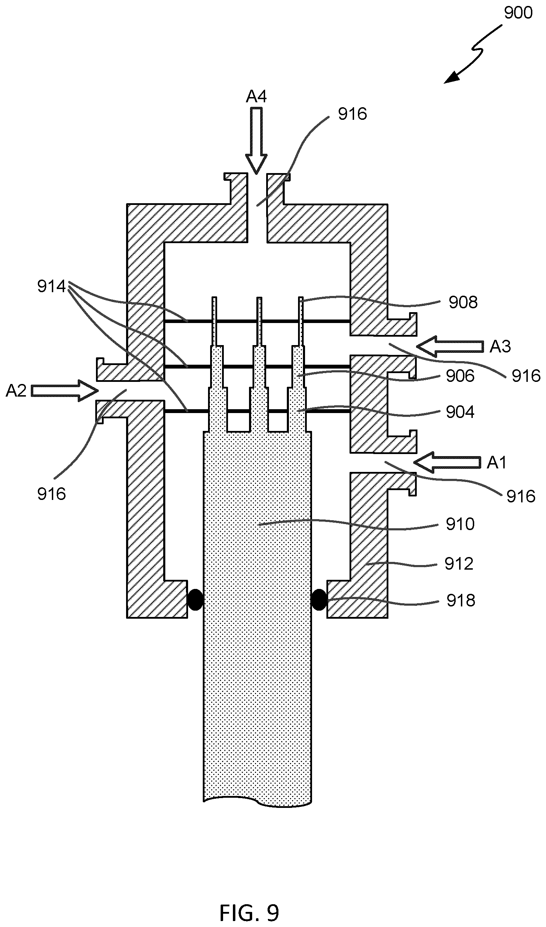

Extensions of a cane interface may act as chambers to individually access sets of capillaries (e.g. double-nested, nested) and a core of a cane. The use of an interface structure, such as a cane interface, allows for control of pressurization in various hollow parts of an optical fiber while it is being drawn. Further, an interface structure as described herein provides a simple manufacturing method to reliably produce an interface structure, which drastically increases the productivity by speeding up the process of drawing optical structures. The interface structure as described herein does not require hollow needles to be fed into hollow parts of a preform or a cane prior to drawing therefore the interface structure described herein is more reliable and may be entirely or mostly automated. The extensions are insertable into a device containing membranes that act as pressure barriers so that different parts of a cane or preform can be pressurized without using hollow needles. This is discussed in relation to FIGs. 7 and 9.

Optionally, the interface structure and the optical structure are provided in a drawing tower 506. This enables, for example, a cane to be pressurized during a drawing process into an optical fiber. An example apparatus that may be configured for mounting to a drawing tower is described herein with reference to FIG. 9. In some examples, water cooling is used during the drawing process.

Pressure is applied 508 to the interface structure to pressurize hollow parts of the optical structure during a drawing process. Pressure is applied to hollow parts of the optical structure via extensions of the interface structure. In one example, gas enters chambers and core of a cane and pressurizes hollow spaces within the cane. As chambers are accessible independently (due to the extensions), the pressure in each chamber is controllable allowing for a desired pressure level to be applied in each chamber, which may be a capillary. This is described herein, with reference to FIG. 6B.

The disclosed methods have many advantages. Interface structures may be additively manufactured, or laser cut, therefore there is a great variety in possible configurations of an interface structure that may be produced. The methods disclosed herein offer flexibility in terms of cane size and shape that the methods may be applied to, and also flexibility in the arrangement of capillaries that may be interfaced with. The methods may be automated to increase cane drawing speed. Furthermore, by accurate pressurization of capillaries and other cane or preform structures, there is an increase in yield of high-quality optical fibers that reduce wastage. A direct access to each capillary using the extensions in a cane interface allows for the complex pressurization requirements (i.e., allowing for different amounts of pressure to be applied to the internal capillaries as required, such as, for example, an innermost nested capillary being supplied by the highest pressure).

FIG. 6A is a flowchart of a method 600A used for manufacturing an interface structure by additive manufacturing that, in some examples, comprises 3D printing. The method 600A comprises extracting an end face map 602A, manufacturing an extruded map of the end face to produce an interface structure 604A and attaching the interface structure to the optical structure 606A.

Extracting the end face map 602A refers to collecting an image of an end face of a preform or cane. In an example, the extracting the end face map involves receiving an image of an end face of a cane. The image may show the entirety or an outline of the internal structure of the cane, clearly displaying all capillaries including internally nested capillaries, the core of the cane and the glass cladding that may be an outer layer. The image may be taken using an imaging/optical microscope or another suitable imaging apparatus.

Next, the interface structure is manufactured from a map of the imaged end face to produce an interface structure 604A. In some examples, a 3D printing apparatus prints using the same material that the optical structure is comprised of to produce the interface structure. In various examples, a 3D printer prints silica to produce the silica glass cane interface. Example additive manufacturing methods include but are not limited to stereolithography, selective laser melting, and binder jetting. Stereolithography uses light, most frequently UV light, to cure photosensitive suspensions through photopolymerization, to change liquid resins to solid. Selective laser melting focuses a laser beam at the nozzle of a 3D printer to melt silica material and deposit it on an intended surface. Binder jetting is where a liquid material is used as binding agent to hold powder materials such as sand, silica, ceramic, etc. The material used in additive manufacturing to create the interface structure does not have to be the same material as the optical structure because it does not have to transmit light, but rather it is required to transmit pressure to hollow channels, such as nested capillaries within a cane.

In one example, a 3D printer is provided with an image of the end face of a cane, and the 3D printer builds up a series of extensions that correspond to the outline of the internal structure in the end face map of the cane. In other words, if the end face map showed a double-nested internal structure, the extensions that are 3D printed will correspond to the double-nested internal structure such that the series of extensions have the appearance of extensions to the internal capillaries.

The extensions have the same length, or in other examples innermost nested capillaries may have a longest length, while the outermost nested capillaries are shorter. Any length combination is possible for the extensions, depending on the desire of the user of the interface structure, however, it may be advantageous to have the innermost nested capillary as the tallest extension, for reasons described herein. The desired extension lengths may simply be provided as instructions to a 3D printer.

In some examples, a 3D printer prints a base with the extensions. The base is a thin layer corresponding to the outer glass cladding at the end face. The purpose of the base is to allow the extensions to be connected to each other without falling apart. As the extensions correspond to the internal structure of the nested capillaries of the optical structure, the extensions will meet and connect at the point of fusion of the capillaries with the glass cladding also. Hence, the inclusion of the base allows for extensions to remain connected to each other, as well as capillaries not part of their own nesting.

The interface structure is attached 606A to the optical structure. In one example, an interface structure is 3D printed separately and then attached to an optical structure. The optical structure may include, for example, nested capillaries on a cane preform or on a cane. Attachment may be performed by any suitable method such as those described above. The interface structure is attached to the optical structure such that extensions of the interface structure are aligned with corresponding capillaries of the optical structure (i.e. the extensions may appear as if they are extensions of the internal capillaries). In other examples, an interface structure is manufactured directly onto an optical structure end face, rather than being manufactured separately and then later fused. Once the interface structure is attached to the optical structure, it is ready to be pressurized, and the optical structure drawn.

FIG. 6B shows a manufacture of an interface structure 600B. The manufacture 600B may be performed in accordance with the method shown in FIG. 6A.

An optical structure end face map 602B is extracted. In one example, the end face map may be of a cane with a double-nested capillary arrangement with an internal structure such as that shown in FIG. 3. However, this arrangement is not a requirement. An end face map may be extracted by taking an image of the end face for any configuration of optical structure (e.g. preform or cane, with nesting arrangements such as those shown in FIG. 1 or FIG. 2).

The end face map 602B is processed to provide a three-dimensional (3D) model that has capillaries with a smaller cross-sectional size/diameter extending further than those with a larger cross-sectional size/diameter should they be present. Capillaries in a 3D model extend further than cladding surrounding any capillaries. The processing may be performed by a computer operator in a design package, or automated using a computer program, such as a machine learned model trained on a data set consisting of optical structure end faces and associated 3D models with capillaries extended. A 3D printer may be provided with data from the 3D model and begins to produce an interface structure by printing a base 612B and extensions from separate layers 604B. The base is illustrated as being printed first in this example; however, this is merely illustrative and the order is not fixed.

Extensions are printed and built upwards 606B. Extensions aligning with capillaries 610B and may be built in stages, such as those illustrated in 606B with sets of extensions 610B corresponding to nested capillaries being printed in turn, or an any other suitable order. An outermost capillary may have a greater diameter and a corresponding shortest extension, a first nested capillary may have a mid-sized extension, while a double-nested capillary may have a longest extension. It is important to note that this length difference is not a requirement but is advantageous as it provides a greater number of different pressures to be provided to a cane during a drawing process allowing greater control of the drawing process and a higher quality resultant optical fiber. Any length combination is possible (i.e., the double-nested capillaries could be shortest or longest, depending on requirements or preference of the user). The order of stage construction, such as printing the shortest extension first, is also not fixed or required, and any order could be used.

Once the extension construction is complete, and all extensions 608B are printed, the interface structure is attached to a corresponding optical structure 614B. Attachment may be by means of a fusion splice or bonding with an adhesive or cement depending upon the materials used. Alternatively, an interface structure may be constructed directly on an optical structure end face.

After the attachment of the interface structure to the optical structure (or the interface structure is manufactured on the optical structure), each extension will align with an internal capillary or another structure of the optical structure. The use of an interface structure greatly simplifies the process of pressurizing capillaries during a draw process because the pressure can be applied to each extension individually (or applied to a set of extensions, wherein the sets are based on common extension length). Once pressurization is complete, it is possible to remove the interface structure by simply cutting it off, if required.

FIG. 7 shows an example of a membrane configuration for receiving an interface structure 700. The interface structure 700 comprises a base 702, extensions 704, 706, 708 extending from the base 702 and membranes 710, 712 and 714. The interface structure may already be attached to an optical structure; however, an attached optical structure is omitted from the figure for clarity. In other examples, which are not illustrated, the membranes are added to the interface structure before the interface structure is attached to the optical structure.

In this example shown in FIG. 7, three membranes 710, 712, 714 are provided and the interface structure extensions pass through one or more membranes with the longer extensions passing through a greater number of membranes. The membranes act as pressure seals used as part of a larger device, not illustrated in FIG. 7. The extensions in the example of FIG. 7 are selected to have length differences, which enables associated capillaries to be exposed to different pressures during a draw process. This control is further improved by using multiple membranes. At least one membrane engages with at least one extension, such that the membrane is pierced by one or more extensions, wherein a set of extensions is a group of extensions with a common length range that pierce a common number of membranes. As shown in FIG. 7, three membranes are used 710, 712, 714. First membrane 710 is applied to the extensions and fit such that it is pierced through all sets of extensions, 704, 706 and 708. Second membrane 712 is applied to the extensions and fit such that it is pierced by two sets of extensions 706 and 708, the two sets of extensions being the middle-size length and tallest extensions. Third membrane 714 is applied to the extensions and fit such that it is pierced by one set of extensions 708, the one set of extensions being the tallest extensions. Membranes may be layered and made out of any suitable material for sealing pressure, such as a silicone rubber, for example. Preferably, the material of the membrane is able to withstand heat propagated from a necking-region of the preform where a cane is becoming an optical fiber. At this point, the temperature may reach 200 degrees C and possibly higher. Preferably, the membrane material should not out-gas, which is a release of a gaseous compound from a material, because out gassed compounds may enter the optical fiber which is not desired as it may affect optical fiber performance. An alternative to silicone rubber is a potting compound, such as Elastosil (RTM), that when cured, becomes compliant. An example membrane thickness is approximately 1 mm or less, however it depends on the length of the one or more extensions.

The use of the membranes enables a control of pressurization during a draw process. By controlling pressure provided above, between and/or below the membranes it is possible to pressurize only some capillaries or all capillaries with distinct pressures. As an example, only the tallest extensions 708 pierce the membrane 714. Hence, if a source of pressure, such as an inert gas like argon, is applied from above against membrane 714, the gas will only enter extensions 708, and therefore only enter the innermost double-nested capillaries of an optical structure, such as a cane, that the interface structure is attached to. Gas will not enter the other extensions or the core due to the pressure-sealing function of the membrane.

The same is true for the other extensions. In FIG. 7, if pressure was provided between membranes 714 and 712, only the middle size length extensions 706 (and corresponding nested capillaries) will be pressurized. Again, for pressure applied between membranes 712 and 710, the shortest length extensions 704 will be pressurized. Finally, if pressure was applied between membrane 710 and base 702, all extensions will be non-accessible to the source of pressure, however, a hollow core of the optical structure will be pressurized.

This means that the use of the membranes gives great control allowing pressurization of each individual capillary and also a hollow core. This enables fine-tuning and control over capillary and hollow core pressurization during a draw process.

To prevent the source of pressure travelling around the membranes, the optical structure and interface structure shown in 700 may be contained within a housing (which has been omitted from FIG. 7). The membranes 710, 712 and 714 seal around the extensions, but the outer edge of the surface may seal against a wall of the housing. In various examples, openings are created in this housing to enable access to the space between the membranes, or between the membrane and base of the cane interface in order to provide pressure to the space between the membranes that may receive one or more extensions.

It is also important to note that while FIG. 7 shows three membranes in use, this is only illustrative. A greater or fewer number of membranes may be required for a greater of fewer number of sets of extensions.

FIG. 8A is a flowchart of a method 800A used for manufacturing an interface structure by laser cutting an optical structure to expose extensions. The method comprises receiving an optical structure 802A, laser cutting a cladding of the optical structure to expose the internal capillaries to create extensions 804A and laser cutting the internal capillaries to create extensions of a desired length 806A.

First, an optical structure is received 802A. The optical structure may be, for example, a preform or a cane. The method is not limited to being performed on only canes and may be performed on other stages of the drawing process (e.g. the preform itself), but a cane is used as an example. This part of the process may be the same as or similar to the exemplary additive manufacturing method.

Next, the optical structure is laser cut 804A. Specifically, the glass cladding of the optical structure is laser cut to remove a section of the glass cladding. This exposes the internal capillary structure of the optical structure. In other words, nested structures within the optical structure are exposed. These exposed internal capillaries provide extensions as described above.

The method further comprises laser cutting the internal capillaries to create extensions of a desired length. In an example, the laser cuts an outermost capillary to expose an inner nested capillary. Next, the laser cuts the nested capillary to expose a double-nested capillary. In this way, the method reproduces extensions as described above. The length of the extensions are customizable as the laser may be applied to cut a desired position along the length of the optical structure or its internal capillaries.

This exemplary cane interface may be constructed on the optical structure. A source of pressure may then be applied to the interface structure (in any appropriate way as described previously, such as using a fluid) to pressurize hollow parts of the optical structure.

FIG. 8B shows an example an interface structure manufactured using a material removal method, such as using a laser. The interface structure 800B comprises a set of extensions 802B, 804B, 806B formed from optical structure material. There is also shown an optical structure 810B connected to the interface structure and a position 808B where the laser or other suitable method was applied to the optical structure.

In a laser cutting example, the optical structure 810B is received and a laser is first applied to cut the outer glass cladding. As shown in FIG. 8B, the laser was applied at position 808B, but also applied along the length of the interface to expose various internal capillaries. The section of the glass cladding that has been laser cut is removed to expose internal capillaries 802B, 804B, and 806B, forming the required extensions for an interface structure.

In various examples, such as that shown within FIG. 8B, the extensions are further laser cut to different lengths. As shown, the outermost capillary is reduced in length the most, so it has the lowest length. The middle capillary corresponding to a nested structure is reduced in length, so it has a middle size length. This means that the double-nested capillary has the greatest length. This interface structure is constructed on an optical structure. A source of pressure may then be applied to the interface.

As with the interface structure shown in FIGs. 6A and 6B, the process shown in FIGs. 8A and 8B enables pressurization of individual capillaries during a drawing process as unique pressure levels can be applied to each extension (or applied to a set of extensions, wherein the sets are based on common length or range of lengths). Once drawing and pressurization is complete, it is possible to remove the interface structure by simply cutting it off from the optical structure. Furthermore, the interface structure as manufactured by the method of FIG. 8A may uses seals, such as the membranes described above, to access the internal capillaries of the optical structure.

An alternative to material removal by laser cutting is, for example, by etching. Whereby either masking is used to control the etching rate of parts of the optical structure, or where the optical structure was formed using different materials with different etch rates with the innermost capillaries being formed from a material with a greater resistance to etching that would therefore leave it the longest after an etching process. Wet etching would be a suitable method.

FIG. 9 shows an example apparatus 900 used for pressurizing an optical structure during drawing of a cane or an optical fiber. The techniques described and illustrated in relation to drawing an optical fiber from a cane may be applied to the drawing of an optical structure from a preform. Example apparatus 900 is illustrated partially enclosing an optical structure 910 having an interface structure with extensions 904, 906, 908 extending therefrom.

The interface structure shown in FIG. 9 is illustrative and not intended to be limiting in that the interface structure may be any of the cane interface structures described herein (i.e. the interface structure from any of FIGs. 6A, 6B, 7, 8A, or 8B) or another interface structure for engaging with an optical structure of type not illustrated.

In FIG. 9, a housing 912 provides a chamber that surrounds an interface structure and at least part of the cane 910. The housing contains three membranes 914 subdividing the chamber that act to isolate a particular set of extensions from another set of extensions, wherein each set of extensions is grouped into a set based on extension length. The membranes seal around the sets of extensions that pierce them, but also seal against the interior walls of the housing. Ports 916 in the housing 912 enable pressure to be applied. Each port is in fluid connection with a set of extensions and a correspond set of capillaries that enable capillary pressurization during a draw. Four ports 916 are shown and four arrows A1-A4 indicate different fluid paths into the chamber whereby distinct pressures can be applied via each fluid path and therefore applied to cane capillaries or other hollow structures in an optical structure. The housing 912 may seal against an optical structure 910 by one or more compressive seals 918.

The apparatus shown in FIG. 9 is exemplary, and various other possible configurations or elements are included or not included. For example, for thermal management, the apparatus 900 may include water cooling in various examples. In various examples, the water cooling cools the tube jacket. In some examples, the apparatus 900 may be mounted to a draw tower, so that fibers are pressurized as they are drawn from canes or other optical structures. The number of membranes may vary based on the pressures that are to be applied to capillaries and other hollow sections of a cane or preform.

In FIG. 9 and in other examples, each capillary with a common diameter is illustrated as having a same or similar length extension allowing for a common pressure to be subjected to the interior of those capillaries during a drawing process by inserting them into a common chamber that may be defined by one or more membranes. For example, innermost capillaries with a smallest diameter may each extend the longest, and lengths of surrounding capillaries may each extend less far. This enables minimization of the number of membranes required; however, some examples of optical structures have each capillary and central hollow core extending different lengths enabling the pressure in each capillary to be isolated for drawing. Alternatively, sub-groups of capillaries of a same or similar length may extend through specific membranes allowing isolation of any number of capillaries during drawing. Isolating each capillary or a sub-group of capillaries allows for pressure testing of a respective pressure interface and each capillary or sub-group of capillaries prior to drawing as well as individual control of capillary pressures during drawing. Improved pressure testing may both improve fiber yield by reducing failed draws, and increase uniformity of drawn fibers that will provide similar optical performance metrics for those drawn fibers.

Alternatively, or in addition to the other examples described herein, examples include any combination of the following clauses:
Clause A. A method for pressurizing an optical structure prior to drawing the optical structure into an optical fiber, the optical structure comprising a glass cladding and a plurality of capillaries within the glass cladding, the method comprising: manufacturing an interface structure for an end of the optical structure, the interface structure comprising a plurality of extensions, wherein each of the plurality of extensions is aligned with one of the plurality of capillaries, wherein the extensions extend beyond the glass cladding; and providing a source of pressure to the plurality of capillaries via the interface structure.
Clause B. The method of clause A, wherein the optical structure comprises a cane produced from a preform.
Clause C. The method of any clause A or clause B, wherein the plurality of capillaries of the optical structure comprises a nested capillary arrangement with at least one capillary contained with another capillary.
Clause D. The method of any preceding clause, wherein: a first subset of the plurality of extensions has a length within a first range; a second subset of the plurality of extensions has a length within a second range; the first subset and the second subsets are defined by capillary diameter.
Clause E. The method of clause D, wherein: the first subset of extensions has smaller diameter than the second subset of extensions; and the first range of lengths is greater than the second range of lengths.
Clause F. The method of any preceding clause, further comprising: imaging an end surface of the optical structure; and additively manufacturing the cane interface based on the image so that the plurality of extensions align with other capillaries of the plurality of capillaries.
Clause G. The method of clause F, wherein the additive manufacturing technique is 3D printing.
Clause H. The method of any of clauses A to E, wherein: the interface structure is formed by selectively removing optical structure material from an end of the optical structure.
Clause I. The method of clause H, wherein a laser is used to remove material from the end of the optical structure.
Clause J. The method of any preceding clause, wherein at least one extension of the one or more extensions is passed through a membrane.
Clause K. The method of clause J, wherein for a first subset of the plurality of extensions there is a pressure differential across the membrane.
Clause L. The method of clause J or clause K, wherein: the first subset of extensions passes through a first membrane and a second membrane; and the second subset of extensions passes through the first membrane and not through the second membrane.
Clause M. The method of any preceding clause, wherein the interface structure and optical structure are provided in a drawing tower prior to providing a source of pressure to the optical structure.
Clause N. The method of any preceding clause, wherein the drawing tower comprises means to provide a differential pressure across one or more membranes, or a pressure controller external to the drawing tower comprises means to provide a differential pressure across one or more membranes.
Clause O. An apparatus comprising an optical structure and an interface structure, wherein: the optical structure is formed to be drawn into an optical fiber and comprises a glass cladding and a plurality of capillaries within the glass cladding; and the interface structure is at an end of the optical structure, the interface structure comprises a plurality of extensions, each of the plurality of extensions is aligned with one of the plurality of capillaries, and the extensions extend beyond the glass cladding.
Clause P. The apparatus of clause O, wherein the optical structure is a cane produced from a preform.
Clause Q. The apparatus of clause O or P, wherein the plurality of capillaries of the optical structure comprise a nested capillary arrangement with at least one capillary contained with another capillary.
Clause R. The apparatus of any of clauses O to Q, wherein a first subset of the plurality of extensions has a length within a first range; a second subset of the plurality of extensions has a length within a second range; and the first subset and the second subsets are defined by capillary diameter.
Clause S. The apparatus of clause R, wherein the first subset of extensions has smaller diameter than the second subset of extensions; and the first range of lengths is greater than the second range of lengths.
Clause T. The apparatus of any of clauses O to S, wherein the interface structure is fused to the optical structure.
Clause U. The apparatus of any of clauses O to S, wherein the interface structure is formed from the same material as the optical structure.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements. The term 'subset' is used herein to refer to a proper subset such that a subset of a set does not comprise all the elements of the set (i.e. at least one of the elements of the set is missing from the subset).

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method (500) for pressurizing an optical structure prior to drawing the optical structure into an optical fiber, the optical structure comprising a glass cladding and a plurality of capillaries within the glass cladding, the method comprising:
manufacturing (504) an interface structure for an end of the optical structure, the interface structure comprising a plurality of extensions, wherein each of the plurality of extensions is aligned with one of the plurality of capillaries, wherein the extensions extend beyond the glass cladding; and
providing (508) a source of pressure to the plurality of capillaries via the interface structure.

2. The method of claim 1, wherein the plurality of capillaries of the optical structure (400) comprises a nested capillary arrangement with at least one capillary (404) contained with another capillary (408).

3. The method of claim 1 or claim 2, wherein:
a first subset of the plurality of extensions has a length within a first range;
a second subset of the plurality of extensions has a length within a second range;
the first subset and the second subsets are defined by capillary diameter.

4. The method of claim 3, wherein:
the first subset of extensions has smaller diameter than the second subset of extensions; and
the first range of lengths is greater than the second range of lengths.

5. The method of any preceding claim, further comprising:
imaging (602B) an end surface of the optical structure; and
additively manufacturing (604B) the cane interface based on the image so that the plurality of extensions align with other capillaries of the plurality of capillaries.

6. The method of claim 5, wherein the additive manufacturing technique is 3D printing.

7. The method of any of claims 1 to 4, wherein:
the interface structure is formed by selectively removing optical structure material from an end of the optical structure.

8. The method of any preceding claim, wherein at least one extension (704, 706, 708) of the one or more extensions is passed through a membrane (710, 712, 714).

9. The method of claim 8, wherein:
the first subset of extensions (706) passes through a first membrane (710) and a second membrane (712); and
the second subset of extensions (704) passes through the first membrane (710) and not through the second membrane (712).

10. The method of any preceding claim, wherein the interface structure and optical structure are provided in a drawing tower prior to providing a source of pressure to the optical structure.

11. The method of any preceding claim, wherein the drawing tower comprises means to provide a differential pressure across one or more membranes, or a pressure controller external to the drawing tower comprises means to provide a differential pressure across one or more membranes.

12. An apparatus (800B) comprising an optical structure (614B) and an interface structure (608B), wherein:
the optical structure is formed to be drawn into an optical fiber and comprises a glass cladding and a plurality of capillaries within the glass cladding; and
the interface structure is at an end of the optical structure, the interface structure comprises a plurality of extensions, each of the plurality of extensions is aligned with one of the plurality of capillaries, and the extensions extend beyond the glass cladding.

13. The apparatus of claim 12, wherein a first subset of the plurality of extensions has a length within a first range;
a second subset of the plurality of extensions has a length within a second range; and
the first subset and the second subsets are defined by capillary diameter.

14. The apparatus of claim 13, wherein the first subset of extensions has smaller diameter than the second subset of extensions; and
the first range of lengths is greater than the second range of lengths.

15. The apparatus of claim 13 or claim 14, wherein the interface structure is fused to the optical structure.
